# EUROPÄISCHE PATENTANMELDUNG

(11) **EP 4 439 900 A2**
(43) Veröffentlichungstag der Anmeldung: **02.10.2024**
(21) Anmeldenummer: 24161444.5
(22) Anmeldetag: 05.03.2024
(51) Int. Cl.: H02J 1/00, H02J 7/00

(54) **VORRICHTUNG ZUR BEREITSTELLUNG VON ELEKTRISCHER ENERGIE MIT MINDESTENS N BATTERIEZELLEN**

(30) Priorität: 27.03.2023 DE 102023202760
(71) Anmelder: Volkswagen Aktiengesellschaft, 38440 Wolfsburg (DE)
(72) Erfinder: Siebke, Konstantin, 22525 Hamburg (DE); Krone, Tobias, 30167 Hannover (DE); Wöhl-Bruhn, Henning, 38162 Cremlingen (DE)

(57) **Zusammenfassung**

Die Erfindung betrifft eine Vorrichtung (1) zur Bereitstellung von elektrischer Energie mit mindestens n Batteriezellen (2), die elektrische Energie für einen ersten Verbraucher (3) und einen zweiten Verbraucher (15) bereitstellen, wobei der erste Verbraucher (3) mit einer ersten Spannung (U1) und der zweite Verbraucher (15) mit einer zweiten Spannung (U2) versorgt wird, wobei die erste Spannung (U1) größer als die zweite Spannung (U2) ist, wobei die Vorrichtung (1) k DC/DC-Wandler (13, 14) aufweist, wobei gilt 2 ≤ k < n, die galvanisch getrennt sind und mindestens eine Primärseite und eine Sekundärseite aufweisen, wobei an der Sekundärseite der DC/DC-Wandler die zweite Spannung (U2) anliegt, wobei die Sekundärseite der k DC/DC-Wandler (13, 14) mindestens teilweise parallel geschaltet sind, wobei mindestens p Batteriezellen (2) jeweils einen Wechselrichter (5) aufweisen und auf eine gemeinsame Sekundärseite eines DC/DC-Wandlers (13, 14) arbeiten, wobei p ≥ 2 ist und/oder p Batteriezellen (2) über einen Multiplexer (20) mit der Primärseite eines DC/DC-Wandlers (13, 14) verbunden sind.

## Beschreibung

Die Erfindung betrifft eine Vorrichtung zur Bereitstellung von elektrischer Energie mit mindestens n Batteriezellen.

Eine solche Vorrichtung ist beispielsweise aus der DE 10 2014 006 746 A1 bekannt. Dabei sind n Batteriezellen in Reihe geschaltet. Die Reihenschaltung liefert dann eine erste Spannung, die zwischen 10 bis 1000 V liegt. Dabei können zur Erhöhung der Kapazität zu den Batteriezellen weitere Batteriezellen parallel geschaltet sein. Weiter weist die Vorrichtung mindestens einen DC/DC-Wandler auf, der galvanisch getrennt ist. An der Sekundärseite des mindestens einen DC/DC-Wandlers liegt dann eine zweite Spannung an, die beispielsweise 5 bis 60 V, vorzugsweise 8 bis 16 V, beträgt. Über den mindestens einen DC/DC-Wandler kann einerseits ein Zellen-Balancing durchgeführt werden und andererseits ein zweiter Verbraucher versorgt werden. In einer bevorzugten Ausführungsform ist dabei jeder Batteriezelle ein DC/DC-Wandler zugeordnet, wobei alle Sekundärseiten aller DC/DC-Wandler parallel geschaltet sind. Nachteilig an dieser Ausführungsform ist der relativ hohe Bauteilebedarf. Des Weiteren wird vorgeschlagen, nur einen einzigen DC/DC-Wandler vorzusehen oder einen DC/DC-Wandler für mehrere Batteriezellen vorzusehen, wobei hinsichtlich der Ausgestaltung nichts weiter offenbart ist.

Eine ähnliche Vorrichtung ist auch aus der US 2020/0055405 A1 bekannt.

Der Erfindung liegt das technische Problem zugrunde, eine Vorrichtung zur Bereitstellung von elektrischer Energie mit mindestens n Batteriezellen weiter zu verbessern.

Die Lösung des technischen Problems ergibt sich durch eine Vorrichtung mit den Merkmalen des Anspruchs 1. Weitere vorteilhafte Ausgestaltungen der Erfindung ergeben sich aus den Unteransprüchen.

Die Vorrichtung zur Bereitstellung von elektrischer Energie weist mindestens n Batteriezellen auf, wobei n ≥ 4 ist und vorzugsweise größer 100 ist. Die Vorrichtung stellt elektrische Energie für einen ersten Verbraucher und einen zweiten Verbraucher bereit, wobei der erste Verbraucher mit einer ersten Spannung und der zweite Verbraucher mit einer zweiten Spannung versorgt wird, wobei die erste Spannung größer als die zweite Spannung ist. Weiter weist die Vorrichtung mindestens k DC/DC-Wandler auf, wobei gilt 2 ≤ k < n. Die k DC/DC-Wandler sind galvanisch getrennt ausgebildet und beispielsweise als Sperrwandler, Eintakt-Durchflusswandler oder Gegentakt-Durchflusswandler ausgebildet. Die DC/DC-Wandler weisen jeweils mindestens eine Primärseite und eine Sekundärseite auf, wobei an der Sekundärseite der DC/DC-Wandler die zweite Spannung anliegt. Die Sekundärseiten der k DC/DC-Wandler sind mindestens teilweise parallel geschaltet. Teilweise bedeutet dabei, dass mindestens zwei DC/DC-Wandler parallel geschaltet sind. Dabei können alle DC/DC-Wandler zusammen parallel geschaltet sein oder aber jeweils zwei oder mehr DC/DC-Wandler sind parallel geschaltet. Sind beispielsweise 6 DC/DC-Wandler vorhanden, so können jeweils zwei oder drei DC/DC-Wandler parallel geschaltet werden, sodass voneinander unabhängige zweite Spannungen zur Verfügung gestellt werden können.

Weiter weisen mindestens p Batteriezellen jeweils einen Wechselrichter auf und arbeiten auf eine gemeinsame Sekundärseite eines DC/DC-Wandlers, wobei p ≥ 2 ist. Dabei kann auch gelten p = n, d.h. allen Batteriezellen ist ein Wechselrichter zugeordnet.

Alternativ oder ergänzend sind p Batteriezellen über einen Multiplexer mit der Primärseite eines DC/DC-Wandlers verbunden. Hierdurch wird eine redundante Spannungsversorgung auf der Sekundärseite geschaffen, die mit weniger Bauteilen auskommt. Auch hier kann gelten, dass p = n ist.

In einer Ausführungsform sind die Wechselrichter als Vollbrückenschaltung ausgebildet.

In einer weiteren Ausführungsform sind die p Batteriezellen mindestens eines DC/DC-Wandlers magnetisch über einen gemeinsamen Kern primärseitig gekoppelt.

In einer weiteren Ausführungsform sind die p Batteriezellen mindestens eines DC/DC-Wandlers elektrisch über die Wechselrichter gekoppelt und weisen eine gemeinsame Primärinduktivität auf.

In einer weiteren Ausführungsform ist mindestens eine Batteriezelle mit zwei Multiplexern unterschiedlicher DC/DC-Wandler verbunden, sodass diese Batteriezelle auch bei Ausfall eines Multiplexers weiter ansteuerbar ist. Die DC/DC-Wandler sind hierzu derart ausgeführt, dass diese im Falle eines Defektes den sicheren Betrieb der verbleibenden nicht beeinträchtigen (Redundanz).

In einer weiteren Ausführungsform sind die DC/DC-Wandler bidirektional ausgebildet, sodass auch Energie in die Batteriezellen zurückgespeist werden kann.

In einer weiteren Ausführungsform sind alle n Batteriezellen mindestens einem DC/DC-Wandler zugeordnet, sodass für alle Batteriezellen auch ein Zellen-Balancing durchgeführt werden kann.

In einer weiteren Ausführungsform sind den Batteriezellen Sensoriken zur Ermittlung mindestens des Gesundheitszustandes (engl. State of Health, SoH) zugeordnet. Beispielsweise erfolgt die Bestimmung des Gesundheitszustandes (SoH) mittels Impedanzspektroskopie. Die erforderliche Anregung der Batteriezellen erfolgt dabei insbesondere durch die DC/DC-Wandler oder die Sensorik.

In einer weiteren Ausführungsform ist die erste Spannung größer 48 V, vorzugsweise größer 240 V. Die zweite Spannung ist kleiner 15,5 V, vorzugsweise 12 V.

In einer weiteren Ausführungsform ist den Sensoriken zur Ermittlung des Ladezustandes mindestens eine Auswerte- und Steuereinheit zugeordnet, wobei die Auswerte- und Steuereinheit auch die DC/DC-Wandler ansteuert, was weitere Bauteile einspart.

Ein bevorzugtes Anwendungsgebiet der Vorrichtung ist der Einsatz in einem Traktionsnetz eines Elektro- oder Hybridfahrzeugs.

Die Erfindung wird nachfolgend anhand bevorzugter Ausführungsbeispiele näher erläutert. Die Figuren zeigen:
- Fig. 1: ein schematisches Blockschaltbild einer Vorrichtung zur Bereitstellung von elektrischer Energie in einer ersten Ausführungsform,
- Fig. 2: ein schematisches Blockschaltbild einer Vorrichtung gemäß einer zweiten Ausführungsform und
- Fig. 3: ein Teil eines schematischen Blockschaltbildes einer Vorrichtung gemäß einer dritten Ausführungsform.

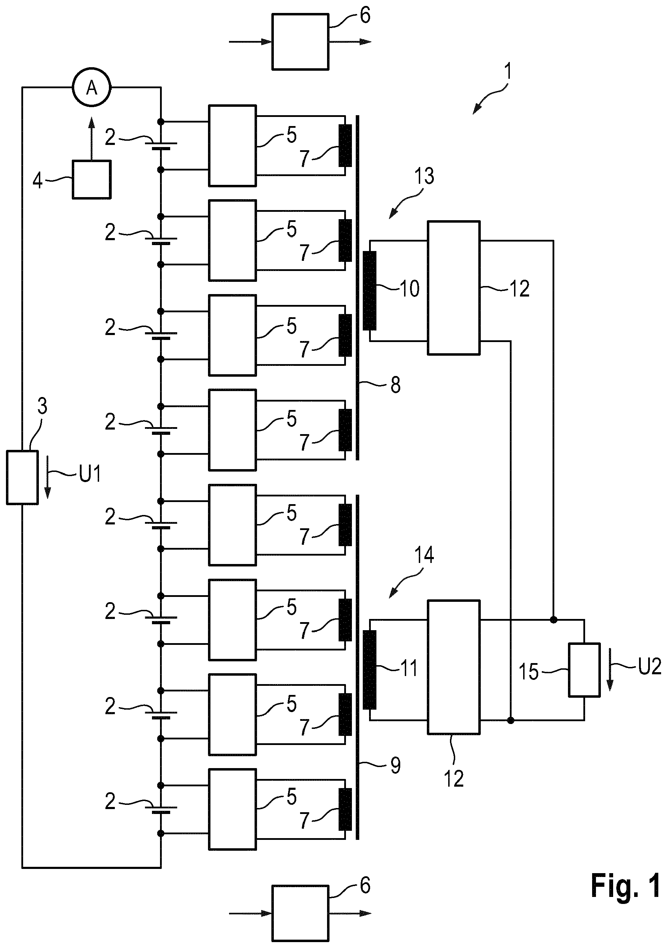

In der Fig. 1 ist ein schematisches Blockschaltbild einer Vorrichtung 1 zur Bereitstellung von elektrischer Energie mit mindestens n Batteriezellen 2 dargestellt. Im dargestellten Beispiel sind acht Batteriezellen 2 dargestellt. Die Batteriezellen 2 sind in Reihe geschaltet. Die Batteriezellen 2 sind beispielsweise als Li-lonen-Batteriezellen ausgebildet. Die Reihenschaltung der Batteriezellen 2 stellt eine erste Spannung U1 für einen ersten Verbraucher 2 zur Verfügung. Dabei kann die erste Spannung U1 beispielsweise 400 - 800 V betragen, wobei dann entsprechend viele Batteriezellen 2 in Reihe geschaltet werden müssen. Den Batteriezellen 2 sind jeweils Sensoriken 4 zugeordnet, mittels derer Daten mindestens auf einem Ladezustand (SoH) der Batteriezellen 2 geschlossen werden kann. Beispielsweise weist eine Sensorik 4 einen Spannungssensor und einen Temperatursensor auf. Dabei kann die Sensorik auch Mittel zum Aufprägen einer kleinen Wechselspannung aufweisen, um den Gesundheitszustand (engl State of Health, SoH) mittels Impedanzspektroskopie zu ermitteln. Zwischen den Batteriezellen 2 und dem ersten elektrischen Verbraucher 3 ist ein Stromsensor A angeordnet. Weiter ist jeder Batteriezelle 2 ein Wechselrichter 5 zugeordnet, der beispielsweise als Vollbrückenschaltung ausgebildet ist. Die Wechselrichter 5 werden hierzu von einer Auswerte- und Steuereinheit 6 angesteuert, um die Gleichspannung der Batteriezellen 2 in eine Wechselspannung zu transformieren. Am Ausgang der Wechselrichter 5 ist jeweils eine Primär-Induktivität 7 angeordnet. Dabei sind die obersten vier Primär-Induktivitäten 7 (bzw. Primär-Wicklungen) einem ersten Eisenkern 8 und die untersten vier Primär-Induktivitäten 7 (bzw. Primär-Wicklungen) einem zweiten Eisenkern 9 zugeordnet. Dem ersten Eisenkern 8 liegt eine erste Sekundär-Induktivität 10 (bzw. Sekundär-Wicklung) und dem zweiten Eisenkern 9 liegt eine zweite Sekundär-Induktivität 11 (bzw. Sekundär-Wicklung) gegenüber, wobei den beiden Sekundär-Induktivitäten 10, 11 jeweils ein Gleichrichter 12 nachgeschaltet ist. Die Eisenkerne 8, 9 können auch andersartige Kerne sein, beispielsweise Blechkerne, Pulverkerne, Ferritkerne usw. Dabei bilden die obersten Primär-Induktivitäten 7, der erste Eisenkern 8, die erste Sekundär-Induktivität 10 und der Gleichrichter 12 einen ersten DC/DC-Wandler 13 (unter Einschluss der Wechselschalter 5). Entsprechend bilden die untersten Primär-Induktivitäten 7, der zweite Eisenkern 9, die zweite Sekundär-Induktivität 11 und der untere Gleichrichter 12 einen zweiten DC/DC-Wandler 14. Die Ausgänge des ersten DC/DC-Wandlers 13 und des zweiten DC/DC-Wandlers 14 sind parallel geschaltet und versorgen einen zweiten Verbraucher 15 mit einer zweiten Spannung U2. Dadurch, dass die beiden DC/DC-Wandler 13, 14 parallel geschaltet sind, ist die Spannungsversorgung des zweiten Verbrauchers 15 redundant. Dabei kann über die DC/DC-Wandler 13, 14 ein Zellen-Balancing durchgeführt werden. Hierzu ermitteln die Auswerte- und Steuereinheiten 6 jeweils die Batteriezelle 2 mit dem höchsten Ladezustand. Deren Wechselrichter 5 wird dann aktiviert, sodass eine Wechselspannung erzeugt wird, die dann auf die Sekundärseite transformiert wird. Sinkt dann der Ladezustand dieser Batteriezelle, kann der Wechselrichter 5 einer anderen Batteriezelle 2 aktiviert werden und der Wechselrichter 5 der ersten Batteriezelle 2 wird deaktiviert. Mit der dargestellten Vorrichtung 1 kann somit der Bauteilbedarf gesenkt werden, aber trotzdem eine redundante Spannungsversorgung und ein Zellen-Balancing zur Verfügung gestellt werden. Sind mehrere DC/DC-Wandler 13, 14 verbunden, so können diese alle parallel geschaltet werden oder aber gruppenweise parallel geschaltet werden, beispielsweise um eine unabhängige redundante Spannungsversorgung für eine weiteren zweiten Verbraucher zur Verfügung zu stellen. Die DC/DC-Wandler 13, 14 können auch bidirektional ausgeführt sein, sodass auch Energie von der Sekundärseite zur Primärseite zurückgespeist werden kann. In der dargestellten Schaltung sind die Batteriezellen 2 magnetisch über den gemeinsamen Eisenkern 8 bzw. 9 gekoppelt.

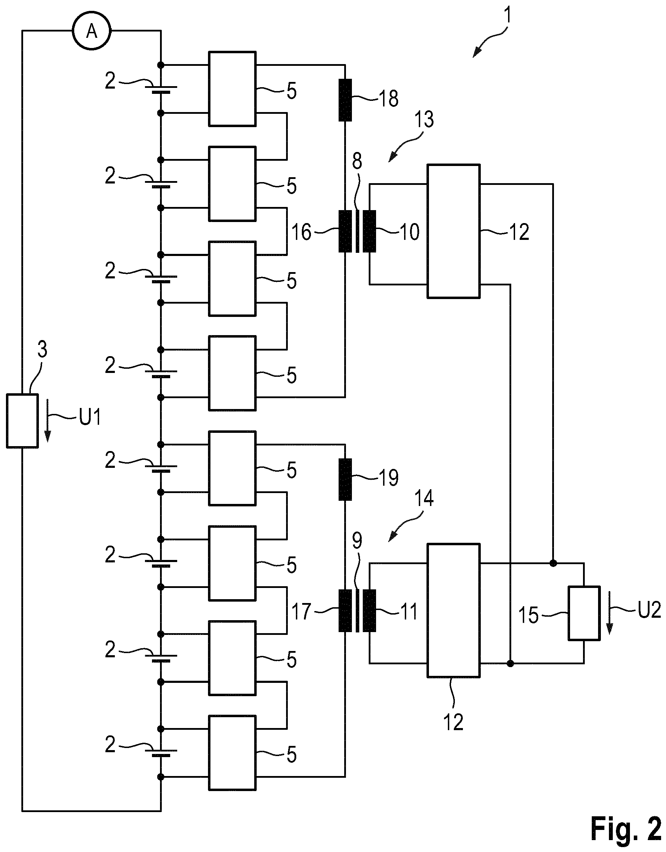

In der Fig. 2 ist eine alternative Ausführungsform einer Vorrichtung 1 dargestellt, wobei gleiche Elemente mit gleichen Bezugszeichen versehen sind, wobei aus Gründen der Übersicht die Sensoriken 4 und die Auswerte- und Steuereinheiten 6 nicht dargestellt sind. Im Gegensatz zur Vorrichtung 1 gemäß Fig. 1 sind hier die Batteriezellen 2 eines DC/DC-Wandlers 13, 14 elektrisch über die Wechselrichter 5 gekoppelt, wobei eine gemeinsame Primär-Induktivität 16 bzw. 17 (bzw. Primär-Wicklung) vorgesehen ist, die dem jeweiligen Eisenkern 8, 9 zugeordnet ist. Weiter ist jeweils eine weitere Zusatzinduktivität 18, 19 (bzw. Zusatz-Wicklung) dargestellt.

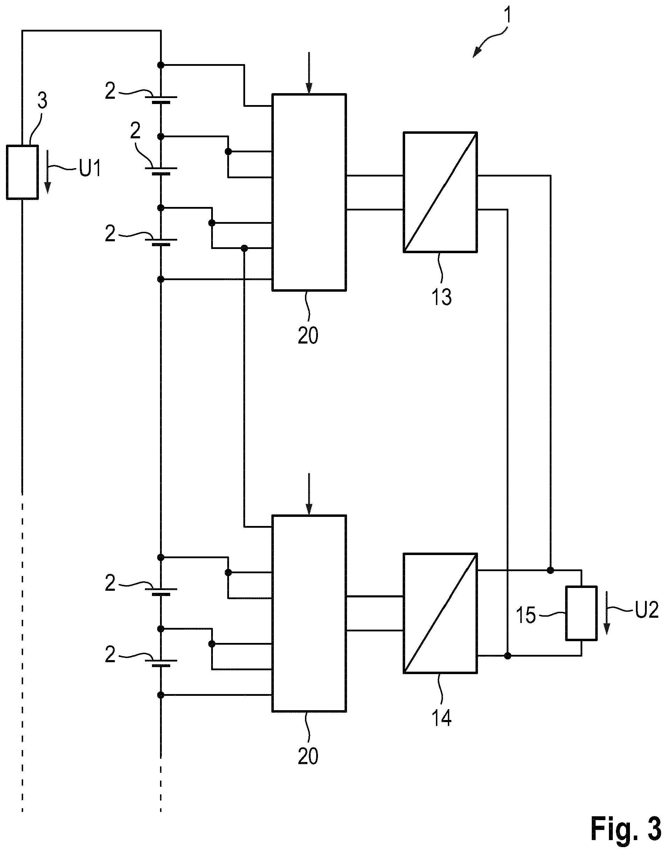

In der Fig. 3 ist eine weitere alternative Vorrichtung 1 dargestellt, wobei wieder gleiche Elemente mit gleichen Bezugszeichen versehen sind. Dabei sind die Batteriezellen 2 gruppenweise jeweils einem Multiplexer 20 zugeordnet. Dabei ist dargestellt, dass die oberen drei Batteriezellen 2 dem oberen Multiplexer 20 zugeordnet sind, wobei die dritte bis fünfte Batteriezelle 2 dem unteren Multiplexer 20 zugeordnet sind. Die dritte Batteriezelle 2 ist also beiden Multiplexern 20 zugeordnet. Wie durch die Punkte angeordnet ist, kann dieses Schaltungsprinzip entsprechend vervielfältigt werden. Um Bauteile einzusparen, sind vorzugsweise mehr als drei Batteriezellen 2 einem Multiplexer 20 zugeordnet (z.B. 5 oder 10). Die Multiplexer 20 werden wieder durch die nicht dargestellten Auswerte- und Steuereinheiten angesteuert. Auch die Sensoriken 4 sind aus Übersichtsgründen nicht dargestellt.

Die drei dargestellten Ausführungsformen können auch beliebig kombiniert werden. Dies erhöht die Ausfallsicherheit weiter.

### Bezugszeichenliste

- 1: Vorrichtung
- 2: Batteriezellen
- 3: erster Verbraucher
- 4: Sensorik
- 5: Wechselrichter
- 6: Auswerte- und Steuereinheit
- 7: Primär-Induktivität (bzw. Primär-Wicklung)
- 8: erster Eisenkern
- 9: zweiter Eisenkern
- 10: erste Sekundär-Induktivität (bzw. erste Sekundär-Wicklung)
- 11: zweite Sekundär-Induktivität (bzw. zweite Sekundär-Wicklung)
- 12: Gleichrichter
- 13: erster DC/DC-Wandler
- 14: zweiter DC/DC-Wandler
- 15: weiter Verbraucher
- 16, 17: Primär-Induktivität (bzw. Primär-Wicklung)
- 18, 19: Zusatzinduktivität (bzw. Zusatz-Wicklung)
- 20: Multiplexer
- A: Stromsensor
- U1: erste Spannung
- U2: zweite Spannung

## Patentansprüche

1. Vorrichtung (1) zur Bereitstellung von elektrischer Energie mit mindestens n Batteriezellen (2), die elektrische Energie für einen ersten Verbraucher (3) und einen zweiten Verbraucher (15) bereitstellen, wobei der erste Verbraucher (3) mit einer ersten Spannung (U1) und der zweite Verbraucher (15) mit einer zweiten Spannung (U2) versorgt wird, wobei die erste Spannung (U1) größer als die zweite Spannung (U2) ist, wobei die Vorrichtung (1) k DC/DC-Wandler (13, 14) aufweist, wobei gilt 2 ≤ k < n, die galvanisch getrennt sind und mindestens eine Primärseite und eine Sekundärseite aufweisen, wobei an der Sekundärseite der DC/DC-Wandler die zweite Spannung (U2) anliegt, wobei die Sekundärseite der k DC/DC-Wandler (13, 14) mindestens teilweise parallel geschaltet sind, wobei mindestens p Batteriezellen (2) jeweils einen Wechselrichter (5) aufweisen und auf eine gemeinsame Sekundärseite eines DC/DC-Wandlers (13, 14) arbeiten, wobei p ≥ 2 ist und/oder p Batteriezellen (2) über einen Multiplexer (20) mit der Primärseite eines DC/DC-Wandlers (13, 14) verbunden sind.

2. Vorrichtung nach Anspruch 1, **dadurch gekennzeichnet, dass** die Wechselrichter (5) als Vollbrückenschaltung ausgebildet sind.

3. Vorrichtung nach einem der vorangegangenen Ansprüche, **dadurch gekennzeichnet, dass** die p Batteriezellen (2) mindestens einen DC/DC-Wandler (13, 14) magnetisch über einen gemeinsamen Eisenkern (8, 9) primärseitig gekoppelt sind.

4. Vorrichtung nach einem der vorangegangenen Ansprüche, **dadurch gekennzeichnet, dass** die p Batteriezellen (2) mindestens eine DC/DC-Wandlers (13, 14) elektrisch über die Wechselrichter (5) gekoppelt sind und eine gemeinsame Primär-Induktivität (16, 17) aufweisen.

5. Vorrichtung nach einem der vorangegangenen Ansprüche, **dadurch gekennzeichnet, dass** mindestens eine Batteriezelle (2) mit zwei Multiplexern (20) unterschiedlicher DC/DC-Wandler (13, 14) verbunden ist.

6. Vorrichtung nach einem der vorangegangenen Ansprüche, **dadurch gekennzeichnet, dass** die DC/DC-Wandler (13, 14) bidirektional ausgebildet sind.

7. Vorrichtung nach einem der vorangegangenen Ansprüche, **dadurch gekennzeichnet, dass** alle n Batteriezellen (2) mindestens einem DC/DC-Wandler (13, 14) zugeordnet sind.

8. Vorrichtung nach einem der vorangegangenen Ansprüche, **dadurch gekennzeichnet, dass** den Batteriezellen (2) Sensoriken (4) zur Ermittlung des Gesundheitszustandes (SOH) zugeordnet sind.

9. Vorrichtung nach einem der vorangegangenen Ansprüche, **dadurch gekennzeichnet, dass** die erste Spannung (U1) größer 48 V beträgt und/oder die zweite Spannung (U2) kleiner 15,5 V beträgt.

10. Vorrichtung nach Anspruch 8 oder 9, **dadurch gekennzeichnet, dass** den Sensoriken (4) mindestens eine Auswerte- und Steuereinheit (6) zugeordnet ist, wobei die Auswerte- und Steuereinheit (6) auch die DC/DC-Wandler (13, 14) ansteuert.
